# EUROPEAN PATENT APPLICATION

(11) **EP 1 241 566 A1**
(43) Date of publication of application: **18.09.2002**
(21) Application number: 00979366.2
(22) Date of filing: 28.11.2000
(51) Int. Cl.: G06F 9/00, H04L 12/28

(54) **A SYSTEM AND METHOD OF THE CABLE NETWORK DEFINED BY A SOFTWARE**

(30) Priority: 07.04.2000 CN 105788X
(71) Applicant: Cathay Roxus Information Technology., Co., Ltd., Chaoyang District, Beijing 100020 (CN)
(72) Inventor: Du, Julong, Chaoyang District Beijing 100016 (CN)
(74) Representative: Patentanwälte Feldmann & Partner AG
(86) International application number: CN0000524
(87) International publication number: WO01077813

(57) **Abstract**

The present invention provides a system and method of cable network defined by software. A programmable chip is adopted in the client side terminal, the chip can implement a new protocol by downloading a program from said head-end server device, or by reading a program from storage media into said client side terminal, to realize the reprogramming of the chip and thereby to modify the functions of the cable network system. Once the head-end server device is renewed or upgraded, without having to renew or upgrade the client side terminal, the protocol performed by said client side terminal can be maintained consistent with the protocol performed by the head-end server device though a process of reprogramming said chip, thus, the cable network system is upgraded.

## Description

### TECHNICAL FIELD

The invention relates to a software-defined cable network system and method, more specifically, to a cable network system, wherein the functions of client side terminals and the cable network system can be upgraded and/or modified by reprogramming the client side device via the network.

### BACKGROUND ART

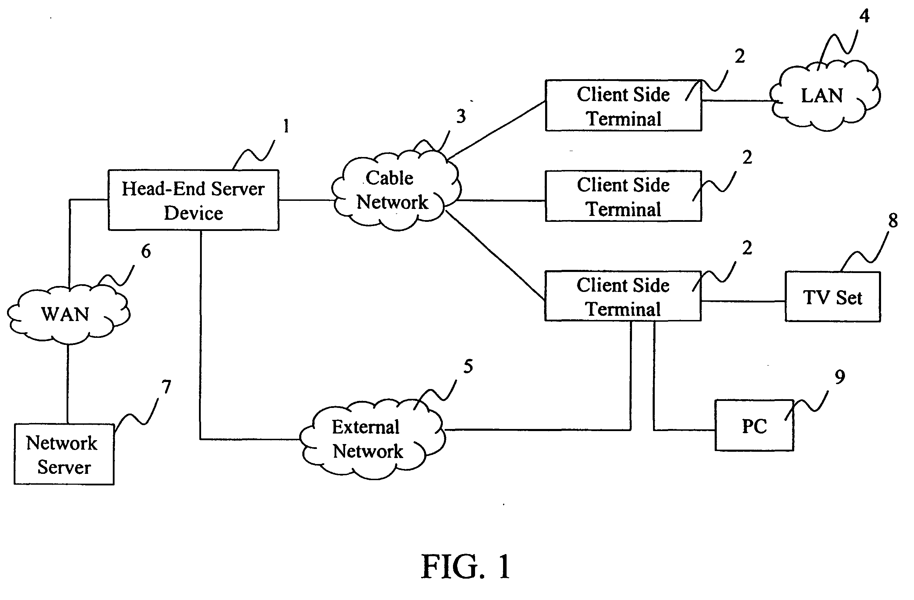

Cable network, e.g. Hybrid Fiber Coaxial (HFC) network, is developing rapidly as multimedia communication network. As shown in FIG. 1, such kind of network typically has a point-to-multipoint network structure, i.e., a head-end server device (1) locating at the service supplier end and a plurality of user terminals (2) locating at the client ends. They are connected via a cable network (3). In the circumstance that the cable network (3) is a one-way network, the head-end server device (1) transmits data to the client side terminals (2) in broadcasting manner, e.g. a digital TV cablecasting network. In the circumstance that the cable network (3) is a two-way network, client side terminals (2) can also transmit data to the head-end server device (1), thereby bidirectional communication is achieved. Even for a one-way cable network (3), client side terminals (2) can also communicate with the head-end server device (1) via an external network (5) to which they both connected. For instance, when the external network (5) is a PSTN, the client side terminals (2) can connect to the PSTN (5) via a modem and communicate with the head-end server device (1) connecting to the same PSTN (5) similarly via another modem. The communication link established via the external network (5) can be bidirectional, however, downlink data are commonly transferred via the cable network (3) due to the low transmission rate of the external network (5), hence a hybrid communication link is composed.

A client side terminal (2) is typically connected to a TV set (6) and a personal computer (9), while it can also be connected to a gateway of a LAN (4) so that various devices in LAN (4) can communicate with the head-end server device (1). Besides providing network management and directly transmitting service data (e.g. multimedia program data), the head-end server device (1) can also connected to a WAN (6) to serve as a gateway of the entire cable network system providing service to all client side terminals (2) as well as the relevant LAN (4). Occasionally, in order to make network management more effective and flexible, some portion of network management functions may be extracted from the head-end server device (1) and implemented into a network server (7), which connects to the entire cable network system through a WAN (6), to achieve the control to the network.

At present, practice instances of above-mentioned system have already been implemented, e.g. the cable modem system currently developed in North America and Europe is a representative example.

Because a large number of client side terminals are generally demanded in a network, it is a goal aimed by various manufacturers to lower the costs of these equipments. For mass-produced electronic devices, an effective approach usually adopted for cost reduction is to use Application Specific Integrated Circuits (ASIC) chips. For example, ASIC chips are widely used in the advanced set-top boxes and the cable modems which have come into the market, to complete numerous digital signal and signaling processing. For example, receiving and transmitting signals in physical layer, signaling control in Media Access Control (MAC) layer and digital video decoding, etc., are all achieved by ASIC chips.

The major disadvantages of such solution in which ASIC chips are used to process signal are the lack of flexibility and the impossibility to reuse resources.

Nowadays, development of communication technology is extremely fast, the speed of emerging and renewals of new theory, new technology and new standards is incomparable to the past. A product based on hardware scheme, which lacks enough flexibility, will be discarded soon. For instance, the DOCSIS cable modem standard currently promoted in North America was upgraded from version 1.0 to version 1.1 within only a year or so. The chip manufacture is obliged to continuously launch new chips because of the changes made to the MAC layer protocol. Even more, the terminal equipment manufacturers and the service supplier spent enormous money on equipment renewal. At present, a new round of hardware upgrading is inevitable due to the significant changes of the physical layer protocol in the proposed version 1.2. Similar circumstance also occurs in the continuous renewals of video coding/decoding arithmetic and standards. The MPEG2 video coding/decoding standard is extensively utilized, however, the MPEG4 has been standardized, while a newer MPEG standard is under discussion. The existing hardware schemes are facing serious problems to accomplish the renovation of these new standards.

To accommodate to the situation that various standards coexist, some hardware manufacturers built a module adaptable to multiple standards in a single chip, e.g. some receiving chips may satellite broadcast receive digital TV signals, cable broadcast signals and terrestrial broadcast signals simultaneously. However, only partial circuit works at a particular time, which causes the waste of resources.

On the other hand, if the client side terminal utilizing ASIC chips attempts to access different networks, only predetermined networks can be accessed since the interface circuits are predesigned for certain environments. This causes great limitation to the client side terminal.

An object of the present invention is to solve the problems existing in the above-mentioned ASIC chip-based scheme by presenting a system and method of software-defined cable network, in which dient side terminals can be upgraded and the functions of the cable network can be changed by simply reprogramming the client side terminal devices via the network. Moreover, once the head-end server device is renewed or upgraded, the function of the client side terminals can be upgraded without having to be replaced.

Another object of the present invention is to present a software-defined cable network system, wherein the client side terminal, as a network-accessing device, can access various types of networks.

### DISCLOSURE OF THE INVENTION

Programmable chips, e.g. general-propose or special-propose Digital Signal Processor (DSP) chips, FPGA chips and general-propose or special-propose CPUs are adopted in the client side terminal of the present invention, therefore the digital signal processing function, as well as the signaling and programs of upper layers, can be modified by programming and/or reprogramming said chips. The process of programming and/or reprogramming to the internal chips may be carried out either by automatic program loading performed by the internal chips once said program is downloaded from the head-end server device via the cable network and/or an external network, or through a storage medium (e.g. floppy diskettes, optical discs, or IC cards etc.) packed with new software issued to the end users by the service supplier or the equipment manufacturer. The end users can install the software to terminal devices manually.

Similarly, said programming and/or reprogramming process for the head-end server devices may be carried out either by a software installation process applied by the service supplier or the equipment manufacturer, or through a software download initiated by the equipment manufacturer or other third party via another network (e.g. the Internet).

The invention can be realized through the following technical scheme: a method of cable network system defined by software, which comprises: a head-end server device, a cable network, a client side terminal and etc., wherein, functions of said client side terminal and said cable network system can be modified by reprogramming the programmable chips employed in said client side terminal.

Said method of chip reprogramming can be realized by downloading a program from said head-end server device, or by loading a program from storage media into said client side terminal, thereby said chip can perform new protocols which support software downloading via network.

Said method to download a program from head-end server device can be realized by storing a program embodying the protocols of the physical layer thru the application layer, i.e. communication protocols used to intercommunicate via the cable network or an external network, into said client side terminal. When said head-end server device is renewed or upgraded, the said chip can maintain the same communication protocol as the one implemented by the head-end server device, by reprogramming said chip without renewing the client side terminal devices. Therefore, the cable network system can be upgraded.

The function that is possessed by said client side terminal device refers to that it has the function of a cable orthogonal modulation transceiver.

The redefinable network terminal devices of the invention comprises: a first analog interface, a first D/A converter, a first A/D converter, a DSP, a second D/A converter, a second A/D converter and a second analog interface circuit, wherein:
Said first analog interface is used to receive the analog signal of at least one network and deliver the analog signal to said first D/A converter, and deliver the analog signal coming from said first D/A converter to said network;
Said first A/D converter is used to convert the analog signal coming from said first analog interface to digital signal and deliver the converted digital signal to said DSP;
Said first D/A converter is used to convert the digital signal coming from said first DSP to analog signal and deliver the converted analog signal to said first analog interface;
Said DSP is used to implement at least the functions of the physical layer and the data link layer described in the ISO Open System Interconnect Recommended Model (i.e. OSIRM) and various source coding/decoding in the application layer, and transfer the output signal which will be dispatched to at least one network to said first D/A converter, and transfer an digital signal which will be dispatched to at least one network application terminal device to said second D/A converter;
Said second A/D converter circuit is used to convert the analog signal coming from said second analog interface circuit to digital signal and transfer the converted digital signal to said DSP;
Said second D/A converter is used to convert the digital signal coming from said DSP to analog signal and deliver the converted analog signal to said second analog interface circuit;
Said second analog interface circuit is used to receive the analog signal originated from said network application terminal unit, deliver the analog signal to said second A/D converter, and used to deliver the analog signal coming from said second D/A converter to said network application terminal unit.

The redefinable network terminal device of the invention comprises: a duplexer, a cable tuner, an RF transmission front-end, a PSTN interface, an A/D converter, a first A/D converter, a DSP, a second D/A converter, an analog interface circuit, and a universal serial interface, wherein;
Said duplexer is used to receive the signal originated from an external cable network and deliver the received signal to said cable tuner, and receive the signal coming from said RF transmission front-end;
Said cable tuner is used to tune the signal coming from said duplexer and deliver the acquired tuned signal to said A/D converter;
Said PSTN interface is used to receive the signal originated from an external PSTN network and deliver the signal to said A/D converter;
Said A/D converter is used to convert the analog signal coming from said cable tuner and said PSTN interface to digital signal, and deliver the converted digital signal to said DSP;
Said DSP is used to implemented at least the functions of the physical layer and the data link layer in the OSIRM and various source coding/decoding in the application layer, transfer the output signal to be dispatched to said cable network and the output signal to be dispatched to said external network to said first D/A converter, transfer the output signal to be dispatched to a network digital application terminal to said second D/A converter, and the output signal to be dispatched to a network analog application terminal to said universal serial interface; Said first D/A converter is used to convert the output digital signal coming from said DSP to an analog signal, transfer the signal to be dispatched via said cable network in the converted analog signal to said RF transmission front-end, and transfer the signal to be dispatched via said external network to said PSTN interface;
Said second D/A converter is used to convert the output signal to be dispatched to said network analog application terminal coming from said DSP to analog signal and deliver the converted analog signal to said analog interface;
Said analog interface is used to deliver an analog signal coming from said second D/A converter to said network analog terminal device;
Said universal serial interface is used to deliver said digital signal coming from said DSP to said network digital application terminal device.

### BRIEF DESCRIPTION OF DRAWINGS

Further features, objects and advantages will be evident from the following detailed description of preferred embodiments of the present invention and taken in conjunction with the accompanying drawings in which;
FIG. 1 illustrates a network having a point-to-multipoint network structure in prior art;
FIG. 2 illustrates functional modules related to the software-definition function portion of the client side terminal in the software-defined cable network system of the invention;
FIG. 3 illustrates functional modules of an embodiment of the set-top box according to the invention;
FIG. 4 illustrates functional modules of another embodiment of the set-top box according to the invention;
FIG. 5 illustrates the corresponding protocol stack performing initial download in an embodiment of the invention;
FIG. 6 illustrates the protocol stack supported by the downloaded program in FIG. 4.

### DESCRIPTION OF PREFERRED EMBODIMENTS

The embodiments of the present invention will be described in detail hereinafter with reference to the accompanying drawings, in which the like reference numerals refer to the like parts and the equivalents. The embodiments are solely the examples in numerous possible embodiments, and those skilled in the art may design other embodiments, through the understanding of these embodiments, without departing from the scope of the invention. Hence, the scope of the invention is not confined by the embodiments, but it is confined by the attached claims.

### Embodiment 1

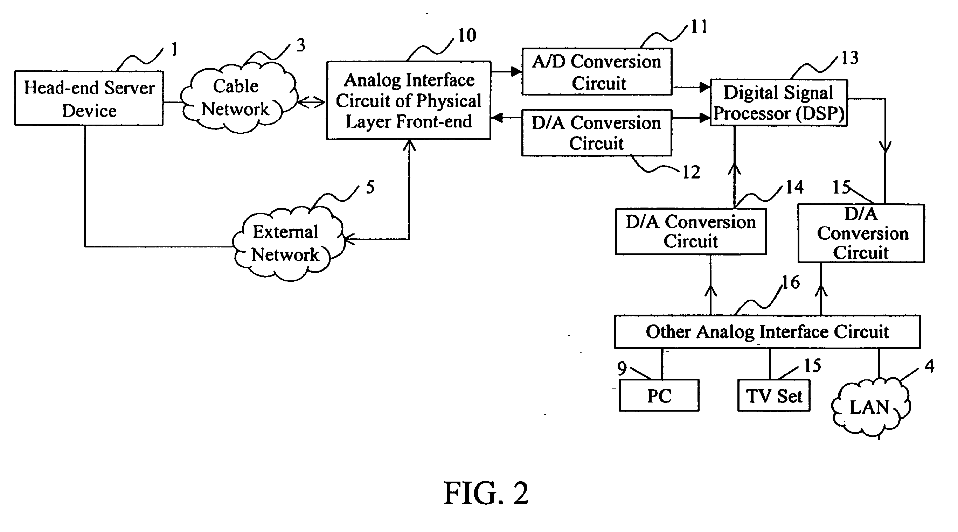

FIG. 2 illustrates the functional modules related to software-defined functions in the client side terminal in the cable network system of the invention, wherein the analog interface circuit of physical layer front-end (10) is connected to cable network (3), and can also be connected to the external network (5). It typically includes a receiving part and a transmitting part. The interface circuit may also comprise more than one receiving and transmitting parts (in which case several D/A, A/D converters are also required). The receiving part receives the analog signal originated from cable network (3) and external network (5), and transforms said signal to analog signal which can be processed by an A/D conversion circuit (11); the transmitting part receives the analog signal coming from D/A conversion circuit (12) and converts it to analog signal suitable to transmit via cable network (3) and external network (5). When the cable network is an HFC network, the analog signal is transmitted in frequency-division multiplexing (FDM) mode when delivered to the end users, thus, the receiving part of interface circuit is usually a tuner which selects one or many different channels from all channels, down-converts the signal and amplifies it to the frequency and amplitude suited for the A/D conversion circuit (11). The transmitting part therefore receives the analog signal transmitted by the D/A conversion circuit (12), up-converts to the frequency of a certain-regulated channel, amplifies and transmits it. If the cable network is constructed with fiber, opto-electronic switching is also necessary. This type of physical layer front-end analog interface circuit (10) is an existing technology currently wide known, therefore it shall not be described in further detail.

After an analog signal was converted to a digital signal by the A/D conversion circuit (11), it is transferred into the DSP (13), while the D/A conversion circuit (12) receives the digital signal transferred from the DSP (13) and converts it into an analog signal. Here the referred DSP (13) is a programmable chip in broad sense, which may be a general-propose DSP chip, a general-propose CPU, a FPGA chip, or a combination of their chips or modules. The D/A, A/D converters and the DSP are frequently built in the same chip.

The A/D conversion circuit (14), D/A conversion circuit (15) and other interface circuit (16) are mainly functioning as an interface between the DSP (13) and local peripherals.

The DSP (13) receives the digital signals transferred from the A/D conversion circuit (11), or transmits the digital signal to the D/A conversion circuit (12). The DSP (13) implements all functions corresponding to the various layers defined in the OSIRM, particularly the functions corresponding to the physical layer and data link layer, and various operations of coding/decoding of the application layer (e.g. video coding/decoding and audio coding/decoding etc.). In current available products, these functions are typically implemented by special-propose hardware chips.

Since the digital signal processing capability is extremely demanded by the functions corresponding to the physical layer, while various upper layer protocols require much program running flexibility (e.g. multi-comparison, branches etc.), therefore according to current available technology, DSP (13) may be a chip (or chipset) synthesized by an FPGA function module, a DSP function module, a general-propose CPU function module, various interfaces, and a storage function module, in which FPGA portion mainly implements the algorithms in physical layer, such as modulation, demodulation, filtering etc. and the interfaces to the MAC layer. The DSP portion mainly implements channel coding/decoding in various physical layers, source coding/decoding in the application layer and parts of functions of the MAC layer, while the CPU implements the rest functions. The boundary between DSP and the CPU has been blurred in some recently emerged DSP chips (or functional modules) based on Very Long Instruction Word (VLIW) architecture. The VLIW general-propose DSP chip, which is still in sampling period at present, is able to accomplish the jobs traditionally done by FPGA, DSP and CPU, thus, it has not only lower cost than the chip composed of multiple functional modules, but also more flexibility and higher hardware resource reuse rate.

At present, the hardware chip, which can accomplish the work of the physical layer and source coding/decoding, is actually implemented by realizing the relevant digital signal processing algorithm by hardware structure, i.e. the client side terminal having the function in FIG. 2 shall be realized by adopting a plurality of specialized modules. In the present invention, the functions of these specialized modules can be realized via a data processor and A/D, D/A conversion circuits.

Today, at the physical layer, some of above-mentioned functions, which are typically realized using hardware structure, have been realized by software (e.g. telephone modem algorithm), while it is simple enough for those skilled in the art to realize the known arithmetic in FPGA or programmable DSP chips. To accomplish the functions of further upper layers using general-propose DSP or CPU is even a disclosed technology, so that it shall not be described in further detail.

### Embodiment 2

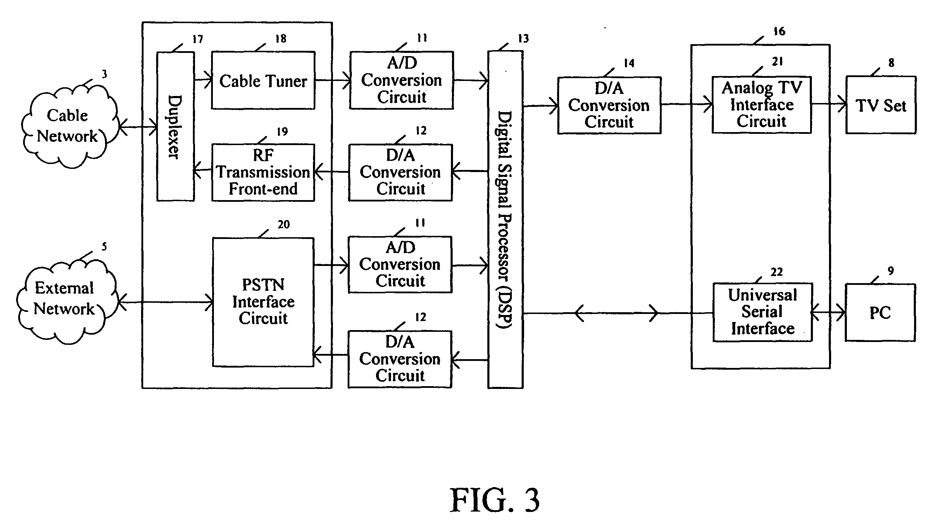

The function of terminal circuit portion in FIG. 2 is to connect a TV set or PC to network, therefore it can be considered as a set-top box. An embodiment of set-top box of the invention is illustrated in FIG. 3. It can realize high-speed bidirectional receiving/transmitting functions via a bidirectional network and may also realize bi-directional communication in a lower speed via an external network (PSTN) using a telephone modem. Wherein the front-end analog interface circuit (10) in the physical layer comprises a duplexer (17) performing interface function to cable network (3), a cable tuner (18), an RF transmission front-end (19), and a PSTN interface circuit (20) to the external network (5) (PSTN), which are all disclosed in prior art and shall not be described in further detail. It includes two A/D conversion circuits (11) and two D/A conversion circuits (12) (however, of different conversion rates). Other interface circuits (16) comprise an analog TV interface circuit (21) and a universal serial interface (22) that are connected to TV set (8) and PC (9) respectively.

In the head-end server device, the functional modules of the portion relevant to software-defined function and the principles of the operations performed by various portions are similar to the corresponding portions in the client side terminal, however, since it is generally required to support multiple channels simultaneously, therefore more front-end transceivers, DSPs and D/A, A/D converters are required.

Similar to FIG. 2, in FIG. 3, function of various special-propose modules in current set-top box can be realized via a data processor and D/A, A/D conversion circuits etc.

### Embodiment 3

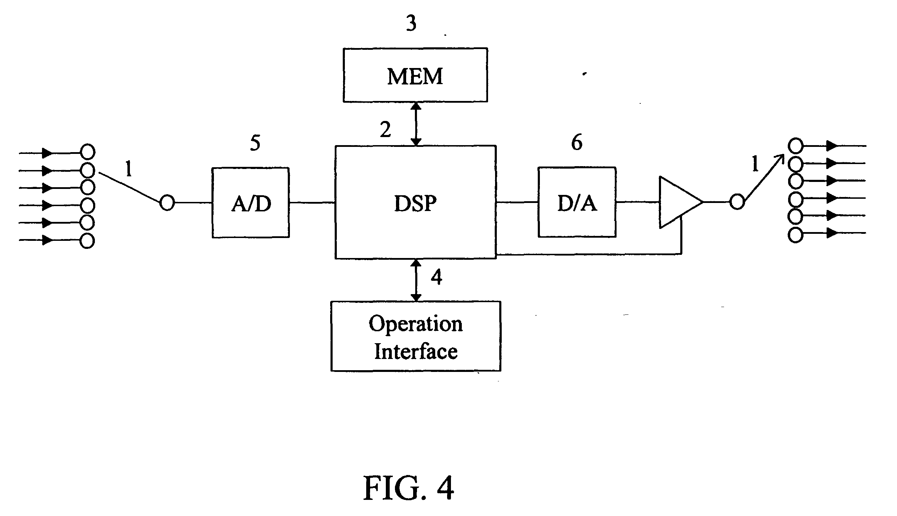

In the embodiment, as shown in FIG. 4, a plurality of different network interfaces are installed on the left side of A/D converter (5), e.g. a telephone line interface, a cable modem interface, a wireless interface etc., a signal selector (1) is added at the downwards end of signals in embodiments 1 and 2, i.e. at the input end of above network prior to the A/D conversion circuit (5) in FIG. 4; another signal selector (1) is also added at the upwards end of signals, i.e. next to the D/A conversion circuit (6). These signal selectors can connect to various network ports according to the DSP's control. Thus, the client side terminal of the embodiment composes an apparatus accessing to multiple networks (set-top box), the functions of modulation, demodulation and communication protocols, etc., which are required for network access, are implemented by running functional software in the DSP. Different access capability can be accomplished by running corresponding software, and directing signals to corresponding accessing signal interface.

In the current client side terminal composed by hardware structures such as ASIC chips, etc., the functions of the MAC layer interfaces and the physical layer are implemented by hardware chips. Corresponding to the changes made to the interfaces of MAC layer and the physical layer, the client side terminal is required to install different relevant interfaces in accordance with different network types, that thereby restricts the flexibility of said client side terminal. While in the invention, since the computations of the physical layer relevant to the data interface are fully implemented by the DSP in a manner of being computed by software, therefore different interface functions can be realized according to different types of accessed networks via the selection of signal selector, when the client side terminal is accessing to different networks, different network access function can be accomplished by the processor by calling different software, therefore the client side terminal of the invention is able to adapt with the variety of accessing various types of networks.

The client side terminal of the invention may be applied in the cases of cable modem, XDSL, Ethernet, etc.

In above embodiments 1-3, the structures of the client side terminals in the software-defined cable network and the head-end server device, and the function of various modules have been described. The process and the method to define the function of this device are illustrated as below.

The client side terminal contains a resident program, which is typically stored in non-volatile storage components. In addition, the head-end server device contains a corresponding program. This pair of corresponding programs can implement all the protocols to intercommunicate via the cable network or external network required by the predefined download program, i.e. it comprises the protocols from the physical layer thru the application layer. However, under ordinary circumstances, this protocol is simpler than the communication protocol for normal operation used by both ends (sometimes, it is not necessary to involve all protocols of all seven layers defined by the OSIRM).

Along with the development of state of technology and economy, the client side terminal and head-end device shall be upgraded continuously, particularly the corresponding physical layer protocol shall also be modified, above corresponding internal resident program shall also be upgraded (i.e., more advanced communication protocols may be adopted), therefore, the relevant program in the head-end server device shall be backward compatible, i.e. it cannot only communicate with new client side terminals, but also communicate with the legacy client side terminals.

This resident software in the client side terminal mainly works in two circumstances. First is when the initial client side terminal is not pre-loaded with a working routine, the resident program will communicate with the head-end server device and download a working routine; second is when the client side terminal is unable to communicate with the head-end server device via the internal working routine, the client side terminal shall communicate with the head-end server device by running the resident program and download a new working routine. The two circumstances shall be described as follows.

The internal working routine of the initial client side terminal (i.e. including the program corresponding with the protocols of various layers and other management and application programs needed for normal operation) may be pre-loaded, while it may also be downloaded, from the head-end server device via previously mentioned resident program. In order to increase the program download speed and reduce the length of resident program, this program down load process may be implemented by steps. For instance, the resident program supports simple and relatively fixed (which means inside the network it may be unchanged for relatively long-term, and no need of upgrading and updating) communication protocol, and download newer downloading software from the head-end server via this protocol. The newer downloading software can redefine the client side terminal (including the physical layer), enable it to download massive working routines from the head-end server device with the new protocol in higher speed and more reliably. For instance, the resident program supports the protocols of telephone modem, to download newer downloading program from the head-end server via the PSTN. The newer downloading program can redefine the client side terminal, enabling it to be able to download current needed working routine in high speed via the cable network. Another probable method is in some relatively fixed channels (may be the narrow band channels) in the cable network, the server front end device can transmit download programs periodically, while in the client side terminal, the resident program can automatically define the terminal and receive newer downloading program. Similar to before, the newer downloading program will further download working routines with the new protocols.

Another situation is when due to unexpected reason, the client side terminal loaded with a working routine is unable to communicate with the head-end server device, e.g. the internal program of client side terminal is damaged or lost; the client side device is shutdown for a long time and missed the communication protocol renewal process of overall network etc. Under this situation, the client side terminal shall start the resident program, communicate with the head-end server device via a process similar to initialization, obtain the download program therefrom, and further acquire a new working routine via the aforesaid program. Similar to the working routine, above resident program can down load a new resident program via itself or loaded working routine, thereby realize self upgrading and renewal.

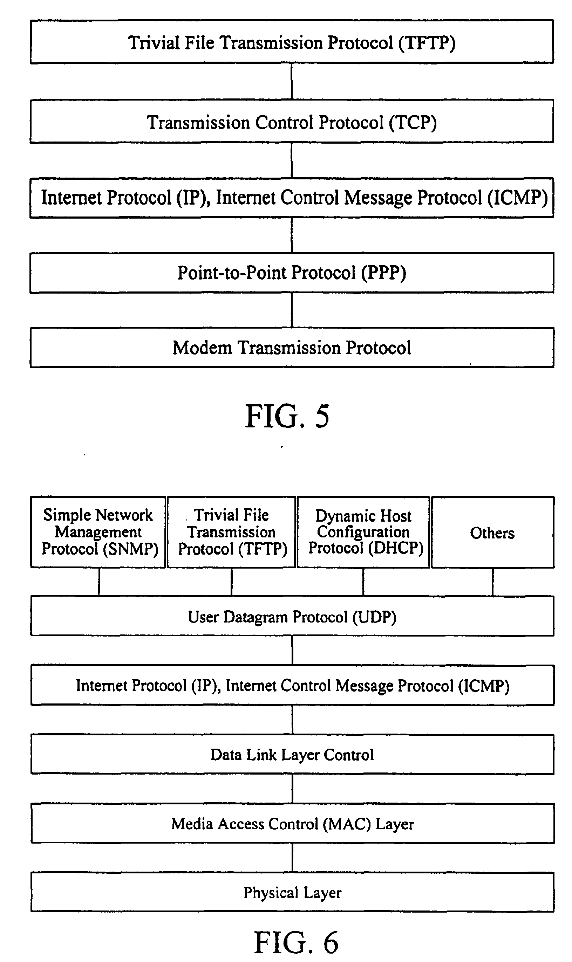

Above download concept shall be further presented incorporating with an embodiment as follows. In the implementation scheme, the client side terminal carries out its initial download via its corresponding protocol stack from the head-end server device utilizing its resident program, as shown in FIG 4, while the protocol supported by the down loaded program is DOCSIS 1.1 protocol, its protocol stack is as shown in FIG. 5.

As shown in FIG. 4, the physical layer in the initial download process is the v.34 telephone modem standard, it shows that the initial download process shall be performed via the external network (PSTN), i.e. the internal resident program of the client side terminal shall provide corresponding telephone modem function. The specific download process will be performed by TFTP via the protocols of the various layers underneath.

After initial download process is performed, the downloaded program shall perform all the DOCSIS 1. 1 defined protocols shown is FIG. 5, at this moment the portion of the physical layer protocol connected to cable network changes its physical layer transceiver to a cable orthogonal amplitude modulation (AM) and provide required channel coding/decoding functions. Its various upper layer protocols shall also be realized via executing programs, thereby the client side terminal becomes a DOCSIS 1.1 compatible cable modem, according to its standard specification, it may download various software, e.g. performs downloading of various working software via its various lower layer protocols by TFTP.

This working software download process may be actively started by the head-end server device, may also started by user from graphic interface of the client side terminal, and may be automatically started from the client side terminal according to preset program requirement. Besides performing file download, the above three methods can also conveniently perform file deletion, e.g. when the user requires to reduce the service items, the head-end server device can issue the instructions automatically requiring the client side terminal to delete a part of internal software, e.g. delete in HDTV software, delete cable modem software etc.

Besides to be defined via above-mentioned methods of remote downloading, the client side terminal can also be defined via a local device e.g. input the software directly into the device via the short range communication interface (parallel interface, serial interface etc.) controlled by internal boot software or working software, and can input the software into the device via a read/write equipment using the portable storage media such as an optical disk, a floppy disk, an IC card etc. This type of download process and specific implementation details are all existing mature technologies, and shall not be described in further detail.

### INDUSTRIAL APPLICABILITY

The advantages brought by the invention via reprogramming to modify the scheme of the chip's internal function are obvious: first, it can upgrade the device flexibly to adapt with a new standard or employ a new technology (e.g. new modem technology and new coding/decoding technology etc.); second, the hardware chip resources can be reused, the same hardware chip (e.g. DSP chip or FPGA etc.) may have different functions via loading or running different software, e.g. at an instant HDTV may be decoded, and at another moment it may become a videophone system with lower resolution; third, cost of service supplier is reduced. Since the service provider can gradually buy the relevant configuration software according to required supporting service, no need of one-time purchase for the hardware device supporting multiple services for probable demand in the future. Therefore, the problems of inevitable upgrading of the hardware in other solutions are avoided.

## Claims

1. A method of defining cable network system by software, which comprises: a head-end server device, a cable network, a client side terminal etc., wherein:
a programmable chip is adopted in the client side terminal, the functions of client side terminal and the cable network system can be modified by reprogramming said chip.

2. Said method of software-defined cable network system according to claim 1, wherein, said method of reprogramming said chip is, enabling the chip to implement a new protocol by either downloading program from said head-end server device, or reading and loading the program stored in the storage media into said client side terminal, to implement chip reprogramming.

3. Said method of cable network system defined by software according to claim 2, wherein, said method of download program from the head-end server device is, a program comprising the protocol of the physical layer thru the application layer, i.e. a program comprising the protocol of performing intercommunication via the cable network or other external network stored in the client side terminal, to implement said downloading process.

4. Said method of cable network system defined by software according to claim 1 or 2, wherein, once said head-end server device is renewed and/or upgraded, under the condition of not renewing the client side terminal, the communication protocols performed by the chip are maintained consistent with the communication protocol performed by said head-end server device by reprogramming said chip, thereby to implement the upgrading of the cable network system.

5. Said method of cable network system defined by software according to claim 1, wherein, said function possessed by the client side terminal refers to the function provided with a cable orthogonal modulation transceiver.

6. Said method of cable network system defined by software according to claim 2, wherein, said storage media comprise optical discs, floppies and smart cards.

7. A redefinable network terminal device, wherein it comprises: a first analog interface, a first D/A converter, a first A/D converter, a DSP, a second D/A converter, a second A/D converter, and a second analog interface circuit, in which:
said first analog interface device is used to receive analog signal of at least one network, transfer the analog signal to said first D/A converter, and deliver the analog signal coming from said first D/A converter into said network;
said first A/D converter is used to convert the analog signal coming from said first analog interface into digital signal and deliver the converted digital signal to said DSP;
said first D/A converter is used to convert the digital signal coming from said DSP to analog signal and deliver the converted analog signal to said first analog interface;
said DSP is used to perform at least the functions of the physical layer and the data link layer in the OSIRM and various source coding/decoding in the application layer; deliver the output signal of at least one network to said first D/A converter and transfer the digital signal to be dispatched to a network application terminal to said second D/A converter;
said second A/D conversion circuit is used to convert analog signal coming from said second analog interface circuit to digital signal and deliver the converted digital signal to said DSP;
said second D/A converter is used to convert the digital signal coming from said DSP to an analog signal and deliver the converted analog signal to said second analog interface circuit;
said second analog interface circuit is used to receive the analog signal originated from said network terminal application device and transfer the analog signal to said second A/D converter and deliver the analog signal coming from said second D/A conversion device to said network application terminal device.

8. Said network terminal device according to claim 7, wherein, said first analog interface circuit is a physical layer front-end analog interface circuit.

9. Said network terminal device according to claim 7, wherein, said network terminal device may be a TV set and/or a computer.

10. A redefinable network terminal device, wherein it comprises: a duplexer, a cable tuner, an RF transmitting front-end, a PSTN interface, an D/A converter, a first A/D converter, a DSP, a second D/A converter, an analog interface circuit, and a universal serial interface, wherein:
said duplexer is used to receive signal originated from an external cable network, deliver the received signal to said cable tuner, and receive the signal coming from said RF transmitting front-end;
said cable tuner is used to tune the signal coming from said duplexer and deliver the attained tuned signal to said A/D converter;
said PSTN interface is used to receive the signal originated from an external network and to deliver the signal to said A/D converter;
said A/D converter is used to convert the signal coming from said cable tuner and said PSTN interface to digital signal and deliver the converted signal to said DSP;
said DSP is used to perform at least the functions of the physical layer and the data link layer in the OSIRM and various source coding/decoding in the application layer, transfer the output signal to be dispatched to said cable network and said external network to said first D/A converter and transfer the output signal to be dispatched to a network digital application terminal device to said second D/A converter and transfer the output signal to be dispatched to a network analog application terminal device to said universal serial interface;
said first D/A converter is used to convert the output digital signal coming from said DSP to an analog signal, and transfer the signal to be dispatched to said cable network in the converted analog signal to said RF transmitting front-end, and transfer the signal to be dispatched to said external network in the analog signal to said PSTN interface;
said second D/A converter is used to convert the output signal coming from said DSP to be dispatched to said network analog application terminal to an analog signal and deliver the converted analog signal to said analog interface;
said analog interface is used to deliver the analog signal coming from said second D/A converter to said network analog terminal device;
said universal serial interface is used to deliver said digital signal coming from said DSP to said network digital application terminal device.

11. Said network terminal device according to claim 7, wherein, also comprises:
a plurality of network interfaces;
a first signal selector, connected between said multiple network interfaces and said first A/D converter, is used for conducting selective access to said network interface;
a second signal selector connected between said multiple interfaces and said first D/A converter is used to perform selective access to said network interface.

12. Said network interface according to claim 11, wherein, said network interfaces may be a cable modem interface, an XDSL interface, an Ethernet interface or wireless interface.
